**Europäisches Patentamt**

**European Patent Office**

**Office européen des brevets**

(19)

(11) Veröffentlichungsnummer: **0 015 402
B1**

# EUROPÄISCHE PATENTSCHRIFT

(12)

(45) Veröffentlichungstag der Patentschrift:
**10.02.82**

(21) Anmeldenummer: **80100643.8**

(22) Anmeldetag: **07.02.80**

(51) Int. Cl.³: **G 02 F 1/17**

(54) **Elektrochrome Anzeigevorrichtung.**

(30) Priorität: **19.02.79 DE 2906320**

(43) Veröffentlichungstag der Anmeldung:
**17.09.80 Patentblatt 80/19**

(45) Bekanntmachung des Hinweises auf die Patenterteilung:
**10.02.82 Patentblatt 82/6**

(84) Benannte Vertragsstaaten:
**AT CH FR GB IT NL SE**

(56) Entgegenhaltungen:
**DE-A1-2 436 176
DE-A1-2 639 300
DE-A1-2 709 086
DE-A1-2 806 670
US-A-3 819 252
US-A-3 998 525
Patents Abstracts of Japan
Band 2, Nr. 49, 6. April 1978**

(73) Patentinhaber: **SIEMENS AKTIENGESELLSCHAFT Berlin
und München, Postfach 22 02 61, D-8000 München 22 (DE)**

(72) Erfinder: **Freller, Helmut, Steinbergstrasse 34a,
D-8505 Röttenbach/Pegnitz (DE)**
Erfinder: **Mund, Konrad, Dr. Dipl.-Phys., Langenbrucker
Weg 10, D-8521 Uttenreuth/Weiher (DE)**

## Elektrochrome Anzeigevorrichtung

Die Erfindung bezieht sich auf eine elektrochrome Anzeigevorrichtung, bestehend aus einer Zelle, aufgebaut aus einer Glasfrontplatte mit einer Schichtenfolge aus einer transparenten Kontaktschicht, einer elektrochromen Wolframtrioxid ($WO_3$)-Schicht, die in Kontakt mit einem flüssigen, gelartigen oder festen mit einem Kontrastmittel vermischten Elektrolyten steht und einer Rückwand als Rückelektrode aus einer Glasplatte mit einer gleichen Schichtenfolge wie die Glasfrontplatte oder aus einer Metallplatte mit einer Wolframtrioxid($WO_3$)-Schicht.

Elektrochrome Zellen mit $WO_3$-Elektroden für die Anwendung als Display werden bisher in einer symmetrischen Anordnung aufgebaut. Sie bestehen üblicherweise aus einer Glasfrontplatte, die eine Schichtfolge aus einer transparenten Kontaktschicht und einer elektrochromen $WO_3$-Schicht aufweist, wobei diese Schichten in einer für die Anzeige erforderlichen Struktur vorliegen. Die Wolframtrioxidschicht steht in Kontakt mit einem flüssigen, gelartigen oder festen Elektrolyten, der die für die Färbung erforderlichen Ionen liefert. Die Rückwand der Zelle, die gleichzeitig die Gegenelektrode bildet, kann entweder ebenfalls eine Glasplatte mit der gleichen Schichtfolge oder eine Metallplatte mit einer $WO_3$-Schicht bilden. Rückelektrodenschichten sind üblicherweise vollflächig aufgebracht. Im Falle eines flüssigen oder gelartigen Elektrolyten ist der Elektrolyt entweder mit $TiO_2$ als Kontrastmittel vermischt oder in einem keramischen Kontrastfilz, der gleichzeitig als Elektrolytreservoir dient, enthalten. Die Elektrolytschicht wird somit an beiden Seiten durch etwa gleich dicke $WO_3$-Schichten begrenzt, d.h. die Zelle ist symmetrisch aufgebaut.

Es besteht das Problem, beim Ansteuern die im Neuzustand ungefärbten, hochohmigen Schichten der Anzeigestruktur durch Anlegen einer Spannung einzufärben, ohne die für die elektrochrome Stabilität der Zelle erlaubten Maximalspannungen zu überschreiten. Die Anwendung höherer Spannung von z.B. mehr als 2 Volt führt zwar im allgemeinen sofort zu guter Färbung und gutem Anzeigekontrast, schädigt jedoch die elektrochrome $WO_3$-Schicht bereits im Anfangszustand und erniedrigt die Lebensdauer der Anzeigestelle. Für die Entfärbung der Zelle ist es notwendig, die Spannung an der Zelle umzupolen, so dass für Ein- bzw. Entfärbung Spannungsimpulse gleicher Höhe, jedoch unterschiedlicher Polarität erforderlich sind.

Für derartige Anzeigezellen wird bisher ein Einlaufprozess angewendet, d.h. die Anzeigezellen werden durch mehrfaches Färben bzw. Entfärben bei kleinen, langsam bis 2 V ansteigenden Schaltspannungen allmählich stärker eingefärbt. Dieses Verfahren ist zwar für die Zellen unschädlich und daher praktikabel; es ist jedoch aufwendig und zeitraubend. Nach längerem Stillstand der Zelle ist der Vorgang zu wiederholen, so dass ein regulärer Anzeigenbetrieb erschwert wird.

In der US-PS 3 840 287 ist bereits vorgeschlagen worden, derartige Zellen durch Aufbau mit mindestens einer gefärbten $WO_3$-Elektrode oder durch nachträgliche Einfärbung durch UV-Bestrahlung in einen aktiveren und damit für den Betrieb günstigeren Anfangszustand zu versetzen. Hierbei ruft jedoch eine UV-Bestrahlung bereits beim direkten Auftreffen auf die $WO_3$-Schicht nur geringe Verfärbungen hervor und ist durch die Glaswand der Zelle hindurch noch weniger wirksam. Eine vorgefärbte $WO_3$-Schicht verliert aber beim Zusammenbau der Zelle einen Grossteil der Färbung.

Der Erfindung liegt daher die Aufgabe zugrunde, eine elektrochrome Anzeigevorrichtung der genannten Art derart zu verbessern, dass sie mit einer geringeren Spannung zur Einfärbung betrieben werden kann.

Erfindungsgemäss wird die Aufgabe dadurch gelöst, dass die Zelle unsymmetrisch aufgebaut ist, derart, dass die $WO_3$-Rückelektrode 2- bis 10-mal dicker ist als die $WO_3$-Elektrode der Glasfrontplatte. Vorzugsweise ist die $WO_3$-Rückelektrode auf 2 bis 3 µm Dicke bemessen.

Die Vorteile der unsymmetrischen elektrochromen Zelle gemäss der Erfindung sind zu sehen in einem geringeren Energiebedarf, da die Polarisation der Rückelektrode wesentlich erniedrigt wird. Die $WO_3$-Rückelektrode mit einer mindestens 2 µm dicken Arbeitsschicht erfüllt die Bedingung, im gefärbten Zustand ein Potential einzustellen, das im Potentialintervall der Frontelektrode liegt. Hat ferner die Rückelektrode das negative Grenzpotential der Frontelektrode, so variiert die Zellspannung nur zwischen den Zuständen $U_{max}$ und 0; das bisher übliche Umpolen der Spannung, das bei der symmetrischen Zelle notwendig ist, entfällt. Ausserdem braucht kein neuer Elektrodentyp entwickelt zu werden. Die Frontelektrode bleibt immer in einem Potentialintervall, das für sie unschädlich ist.

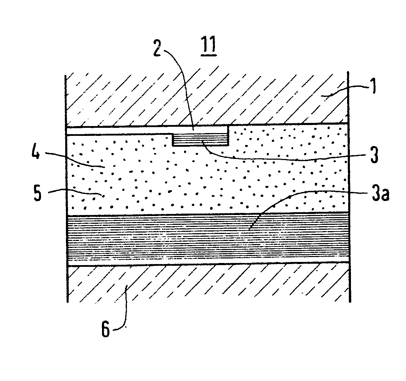

Anhand der Zeichnung und eines Ausführungsbeispiels wird die Erfindung noch näher erläutert.

In der Figur ist in schematischer Darstellung eine elektrochrome Anzeigevorrichtung mit einer unsymmetrisch aufgebauten Zelle 11 gemäss der Erfindung gezeigt. Die Zelle hat z.B. eine Fläche von 4 cm² und besteht aus einer Glasfrontplatte 1, die eine Schichtenfolge aus einer transparenten Kontaktschicht 2 aus z.B. $In_2O_3$ und einer elektrochromen $WO_3$-Schicht 3 mit einer Dicke von 0,5 µm aufweist. Die $WO_3$-Schicht 3 steht in Kontakt mit dem Elektrolyten 4 z.B. aus Propylenkarbonat mit Lithiumperchlorat, in dem ein Kontrastmittel 5, z.B. $TiO_2$, enthalten ist. Die $WO_3$-Rückelektrode 3a mit einer Dicke von 2,5 µm ist 5-mal dicker als die $WO_3$-Anzeigeelektrode 3. Diese dicke, poröse $WO_3$-Schicht 3a kann sowohl auf eine Glasplatte 6 mit transparenter Kontaktschicht als auch direkt auf eine Metallrückwand, wie z.B. aus Nickel, Titan, Aluminium oder Edelstahl aufgebracht sein, wobei eine Aufrauhung der Rückwandfläche eine weitere Oberflächenvergrösserung bringen kann. Die Rückelektrode 3a wird vor dem eigentlichen Betrieb der Anzeigezelle, jedoch nach dem Zusammenbau, stark eingefärbt und zwar bei einer Spannung, die der Zelle nicht schadet. Die Einfärbung kann entweder bereits während des Einfüllvorganges für den Elektrolyten erfolgen; die Gegenelektrode liegt dabei ausserhalb der Anzeigezelle im Elektrolytreservoir oder man färbt über eine Zusatzelektrode, die am späteren Betrieb der Anzeigezelle nicht mehr beteiligt ist, die Rückelektrode erst in der verschlossenen Zelle ein. Durch die starke Einfärbung, die grosse Oberfläche und die vergleichsweise grosse Masse und Kapazität der Rückelektrode 3a erhält diese ein stabiles Potential und es entsteht eine EMK zwischen Front- und Rückelektrode. Eine äussere leitende Verbindung mit der Anzeigeelektrode bewirkt eine Einfärbung mit ausreichendem Kontrast. Eine externe Spannungsquelle wird damit für den Einfärbevorgang überflüssig. Die Gefahr einer Überlastung der Frontelektrode wird vermieden, da einerseits die EMK zwischen Front- und Rückelektrode stets unterhalb der gefährlichen Grenze von etwa 2 V bleibt und andererseits die Frontelektrode bei der Einfärbung im Potential an die Rückelektrode angeglichen wird. Für die Entfärbung der Anzeigeelektrode genügt es, eine positive Spannung von 0,5 bis 1 V an diese Elektrode anzulegen. Die Ansteuerung einer solchen Anzeige wird somit vereinfacht und wesentlich verbilligt.

## Patentansprüche

1. Elektrochrome Anzeigevorrichtung, bestehend aus einer Zelle (11), aufgebaut aus einer Glasfrontplatte (1) mit einer Schichtenfolge aus einer transparenten Kontaktschicht (2), einer elektrochromen Wolframtrioxid(WO$_3$)-Schicht (3), die in Kontakt mit einem flüssigen, gelartigen oder festen, mit einem Kontrastmittel (5) vermischten Elektrolyten (4) steht, und einer Rückwand als Rückelektrode (3a), aus einer Glasplatte (6) mit einer gleichen Schichtenfolge wie die Glasfrontplatte (1) oder aus einer Metallplatte mit einer Wolframtrioxid(WO$_3$)-Schicht, dadurch gekennzeichnet, dass die Zelle (11) unsymmetrisch aufgebaut ist, derart, dass die WO$_3$-Rückelektrode (3a) 2- bis 10-mal dicker ist als die WO$_3$-Elektrode (3) der Glasfrontplatte (1).

2. Elektrochrome Anzeigevorrichtung nach Anspruch 1, dadurch gekennzeichnet, dass die WO$_3$-Rückelektrode (3a) 2 bis 3 μm dick ist.

## Claims

1. An electrochromic indicating apparatus comprising a cell (11) which is constructed from a glass front plate (1). which has a layer sequence thereon consisting of a transparent contact layer (2), and an electrochromic tungsten trioxide (WO$_3$) layer (3), which layer sequency is in contact with a liquid, gel-like, or solid electrolyte (4) in admixture with a contrast medium (5), and a rear wall serving as a rear electrode (3a) made of a glass plate (6) which has a layer sequence thereon identical with that on the glass front plate (1), or made of a metal plate having a tungsten trioxide (WO$_3$) layer thereon, characterised in that the cell (11) is unsymmetrically constructed in such a way that the WO$_3$ rear electrode (3a) is two to ten times thicker than the WO$_3$ electrode (3) of the glass front plate (1).

2. An electrochromic indicating apparatus as claimed in Claim 1, characterised in that the WO$_3$ rear electrode (3a) has a thickness of 2 to 3 μm.

## Revendications

1. Dispositif d'affichage électrochrome constitué d'une cellule (11) se composant d'une plaque (1) frontale en verre comprenant, en couches successives, une couche (2) transparente de contact, une couche (3) électrochrome, en trioxyde de tungstène (WO$_3$), qui est en contact avec un électrolyte (4) mélangé à un agent (5) de contraste liquide, en gel ou solide, et d'une paroi postérieure, servant d'électrode (3a) postérieure, en une plaque (6) en verre ayant la même succession de couches que la plaque (1) frontale en verre ou d'une plaque métallique ayant une couche de trioxyde de tungstène (WO$_3$), caractérisé en ce que la cellule (11) est dissymétrique en sorte que l'électrode (3a) postérieure au WO$_3$ est 2 à 10 fois plus épaisse que l'électrode (3) en WO$_3$ de la plaque (1) frontale en verre.

2. Dispositif d'affichage électrochrome suivant la revendication 1, caractérisé en ce que l'électrode (3a) postérieure en WO$_3$ a une épaisseur de 2 à 3 microns.